# EUROPEAN PATENT APPLICATION

(11) **EP 4 275 873 A1**
(43) Date of publication of application: **15.11.2023**
(21) Application number: 22173198.7
(22) Date of filing: 13.05.2022
(51) Int. Cl.: B29C 70/54, B25B 5/00, B25B 5/12, B25B 5/14, B25B 5/16, B25B 7/02, B25B 7/12, B29C 33/00, F16B 2/06

(54) **ADJUSTABLE HOSE CLAMPING ARRANGEMENT**

(71) Applicant: Siemens Gamesa Renewable Energy A/S, 7330 Brande (DK)
(72) Inventor: Harboe, Niels, 9560 Hadsund (DK); Kjaer, Jeppe, 9000 Aalborg, North Jutland (DK); Soerensen, Nicolai Thinggaard, 9310 Vodskov (DK)
(74) Representative: SGRE-Association

(57) **Abstract**

The present invention describes an adjustable hose clamping arrangement (100) for vacuum-tight sealing of a hose (182) of a flexible insert (584) to a free end (192) of a steel branch (191) of a vacuum mould (593), wherein the flexible insert (584) is guidable through the steel branch (191) from an inside of the vacuum mould (593) to an outside of the vacuum mould (593). The adjustable hose clamping arrangement (100) comprises a clamping device (110) configured for fixedly clamping the hose (182) such that a relative movement between the hose (182) and the clamping device (110) is inhibited, a mould bracket (140) configured for being mountable to the steel branch (191) of the vacuum mould (593), and two connecting devices (120), wherein a first end (151) of each of the two connecting devices (120) is connected to the clamping device (110) and a second end (152) of each of the two connecting devices (120) being opposite of the first end (151), is connected to the mould bracket (140) such that an outer surface (186) of the hose (182) next to a free end (192) of the steel branch (191) is accessible for the vacuum-tight sealing between the hose (182) and the free end (192) of the steel branch (191). Furthermore, the present invention described a vacuum mould arrangement (500) comprising the above-described adjustable hose clamping arrangement (100) and a vacuum mould (593), a method of manufacturing an adjustable hose clamping arrangement (100) and a method of using an adjustable hose clamping arrangement (100).

## Description

### Field of invention

The present invention relates to the field of vacuum assisted resin transfer moulding. Particularly, the present invention relates to an adjustable hose clamping arrangement, a mould arrangement comprising an adjustable hose clamping arrangement, a method of manufacturing an adjustable hose clamping arrangement, and a method of using an adjustable hose clamping arrangement.

### Art Background

In today's vacuum assisted resin transfer moulding process, an outer rigid mould shell and an inner flexible mould shell are used. Hose lead-ins are used for supplying resin to the mould cavity holding the dry lay-up and vacuum for internal membrane filters. These lead-ins are in the form of steel branches with a certain degree of distance between the inner surface of the branch and the outer surface of the hose or moulded plastic insert used.

On the outside of the mould a rubber cold shrink tube is used to seal the hose to the branch, in combination with either tacky tape and/or α-rings. The cold shrink tube is a highly flexible tube in black ethylene propylene diene monomer (EPDM) rubber which after the unwinding of a flexible core allows the pre-stretched rubber to cling to the branch and to form a seal. However, once mounted, the cold shrink tube completely hides the parts in need for a perfect vacuum-tight seal. Furthermore, the cold shrink tube is a rather expensive component not originally intended for a one-time use. The cold shrink tube has rather been designed for primary insulation of solid dielectric insulated wires and cable splicing rated to 1000 volts. Additionally, when removing the cold shrink tube, the cold shrink tube has to be split by a knife. This over time ruins the steel surface of the steel branch. This may result in leakages which occur and may not be realized.

Furthermore, hiding the parts in need for a perfect vacuum-tight seal may result in less chance of realising a possible fault and leaking throughout the casting process adding to the costs of later repair and error codes related to air intruding into the mould.

Therefore, it may be a need to provide a device for allowing to reliably seal, in particular vacuum-tight seal, a mould in a vacuum assisted resin transfer moulding process which is cost-saving and reusable.

### Summary of the Invention

It may be an objective of the present invention to provide a device for allowing to seal a mould in a reliable and cost-saving way. Additionally, it may be desirable to enable an inspection of the sealing, particularly vacuum-tight sealing, of a vacuum mould during the moulding process. Hence, it may be an objective of the present invention to provide an adjustable hose clamping arrangement for a vacuum mould with an increased service life, reduced operational costs, and allowing an increased sealing, particularly vacuum-tight sealing, of the vacuum mould.

This objective may be solved by the adjustable hose clamping arrangement for vacuum-tight sealing of a hose of a flexible insert to a free end of a steel branch of a vacuum mould, a vacuum mould arrangement comprising an adjustable hose clamping arrangement and a vacuum mould, a method of manufacturing an adjustable hose clamping arrangement, and a method of using an adjustable hose clamping arrangement for vacuum-tight sealing of a hose of a flexible insert to a free end of a steel branch of a vacuum mould according to the independent claims.

According to an aspect of the present invention, an adjustable hose clamping arrangement for vacuum-tight sealing of a hose of a flexible insert to a free end of a steel branch of a vacuum mould, wherein the flexible insert is guidable through the steel branch from an inside of the vacuum mould to an outside of the vacuum mould, is described. The adjustable hose clamping arrangement comprises a clamping device configured for fixedly clamping the hose such that a relative movement between the hose and the clamping device is inhibited, a mould bracket configured for being mountable to the steel branch of the vacuum mould, two connecting devices, wherein a first end of each of the two connecting devices is connected to the clamping device and a second end of each of the two connecting devices being opposite of the first end, is connected to the mould bracket such that an outer surface of the hose next to a free end of the steel branch is accessible for the vacuum-tight sealing between the hose and the free end of the steel branch.

The present invention is based on the idea that the adjustable hose clamping arrangement allows for a vacuum-tight sealing by means of a tape, in particular butyl tape, and does not need any additional sealing material such as for example a cold shrink tube. The sealing allows for continuous visual inspection and easy mending in case a leaking occurs. As the sealing is directly visible for an operator, an ultrasound leak detection is also possible. After a casting process, the adjustable hose clamping arrangement, particularly the clamping device, is loosened and stored for the next cycle. Additionally, the steel branch (steel bushing) is simply cleaned by removing remaining butyl without the need of any sharp tools. Hence, by using the adjustable hose clamping arrangement, no sharp tools and no cold shrink tubes are needed. Therefore, a better safety of the vacuum-tight sealing and less costs may be providable by the adjustable hose clamping arrangement. Additionally, as the vacuum-tight sealing is visible, the overall process safety may be improved. Further, ergonomics may also be improved because no pulling of the flexible insert (hose) in a cold shrink tube is necessary which is both tricky and hard to the hands and fingers.

According to this application, the term "fixedly clamping the hose such that a relative movement between the hose and the clamping device is inhibited" may particularly denote that the clamping device may induce a clamping force to the hose which may be such that the hose may not move, particularly relative to the clamping device, during a sealing process.

The term "clamping device" may denote a device which is movable between a clamping configuration in which the hose is clamped at the clamping device and a releasing configuration in which the hose may be releasable from the clamping device. The clamping device according to the present invention may be operatable by a user in a manual operation.

Furthermore, the term "vacuum-tight sealing of a hose of a flexible insert to a free end of a steel branch of a vacuum mould" may particularly denote that the sealing between an outer surface of the hose and the steel branch is provided such that no air passes from the environment to an inner volume of the vacuum mould through the vacuum-tight sealing. Particularly, the provided vacuum-tight sealing is able to withstand a pressure difference between the ambient pressure outside the mould and surrounding the hose and the pressure inside the vacuum mould. The ambient pressure may particularly be 1013 mbar and the pressure inside the vacuum mould may particularly be 20 mbar. Hence, the vacuum-tight sealing may inhibit air to enter the vacuum mould even under influences of a pressure difference of nearly 1000 mbar.

The term "mould bracket" may denote the part of the adjustable hose clamping arrangement which is in use mounted to the steel branch of the vacuum mould to form a counterpart for the two connecting devices. The mould bracket is mounted to the steel branch in a first step. Afterwards, the hose is clamped by the clamping device and the clamping device and the mould bracket are coupled by the two connecting devices.

Further, the term "steel branch of the mould" may be a part of the vacuum mould, which may mounted to the vacuum mould when the two mould halves are fixed together. The steel branch may be releasably fixed to the two mould halves. Further, the steel branch may comprise a tube through which the hose of the flexible insert of the vacuum mould is guidable from the inside of the vacuum mould to the outside of the vacuum mould.

The term "connecting device" may denote a device which is formed to releasably connect the clamping device to the mould bracket. The two connecting devices may particularly be identical connecting devices. Particularly, the connecting devices may be configured to transmit identical forces, particularly, pulling forces. Further, the connecting device may enable a pulling force from the clamping device on the flexible insert such that a flush mount of an inner flange of the flexible insert towards an inner surface of the vacuum mould, in particular the rigid mould shell may be providable.

Furthermore, the term "connected to the clamping device" respectively "connected to the mould bracket" may denote a detachable and re-attachable connection. In other words, the two connecting devices may each be re-usable.

The term "an outer surface of the hose next to a free end of the steel branch is accessible for the vacuum-tight sealing between the hose and the free end of the steel branch" may denote that the free end of the steel branch and the adjacent part of the hose are positioned in-between the clamping device and the mould branch when the clamping device is in a clamping configuration in which the hose is fixedly clamped and a relative movement between the hose and the clamping device is inhibited. Additionally, the distance between the clamping device and the mould bracket and therefore the length of the two connecting devices is such that a user may access the free end of the steel branch with his hand.

According to a further aspect of the present invention, a mould arrangement for vacuum-tight sealing of a hose of a flexible insert to a free end of a steel branch of a vacuum mould is described. The mould arrangement comprises an above-described adjustable hose clamping arrangement, and a vacuum mould comprising the flexible insert, the hose, and the steel branch, wherein the hose is fixedly clamped by the clamping device such that a relative movement between the hose and the clamping device is inhibited, wherein the mould bracket is mounted to the steel branch of the vacuum mould, wherein the first end of each of the two connecting devices is connected to the clamping device and the second end of each of the two connecting devices being opposite of the first end, is connected to the mould bracket, and wherein the outer surface of the hose next to the free end of the steel branch is accessible for the vacuum-tight sealing between the hose and the free end of the steel branch.

According to a further aspect of the present invention, a method of manufacturing an adjustable hose clamping arrangement for vacuum-tight sealing of a hose of a flexible insert to a free end of a steel branch of a vacuum mould, wherein the flexible insert is guidable through the steel branch from an inside of the vacuum mould to an outside of the vacuum mould, is described. The method comprises (a) providing a clamping device configured for fixedly clamping the hose such that a relative movement between the hose and the clamping device is inhibited, (b) providing a mould bracket configured for being mountable to the steel branch of the vacuum mould, (c) providing two connecting devices, (d) connecting a first end of each of the two connecting devices to the clamping device, and (e) connecting a second end of each of the two connecting devices being opposite of the first end, to the mould bracket such that an outer surface of the hose next to a free end of the steel branch is accessible for the vacuum-tight sealing between the hose and the free end of the steel branch.

According to a further aspect of the present invention, a method of using an adjustable hose clamping arrangement for vacuum-tight sealing of a hose of a flexible insert to a free end of a steel branch of a vacuum mould is described. The method of using the adjustable hose clamping arrangement comprises (a) guiding the flexible insert through the steel branch from an inside of the vacuum mould to an outside of the vacuum mould, (b) fixedly clamping the hose by a clamping device such that a relative movement between the hose and the clamping device is inhibited, (c) mounting a mould bracket to the steel branch of the vacuum mould, (d) connecting a first end of each of the two connecting devices to the clamping device, and (e) connecting a second end of each of the two connecting devices being opposite of the first end, to the mould bracket, and (f) vacuum-tight sealing, in particular by using a tacky tape, the hose and the free end of the steel branch.

According to an exemplary embodiment of the present invention, the clamping device comprises a first clamping element and a second clamping element, wherein the first clamping element and the second clamping element are configured for interacting in a clamping configuration such that the relative movement between the hose and the clamping device is inhibited.

Hence, the clamping device may comprise the first clamping element and the second clamping element which may be adapted and/or selected to fit a specific hose, particularly a specific outer shape of a hose. Therefore, the adjustable hose clamping arrangement may be used with different hose diameters. Therefore, a flexible clamping device may be providable. Additionally, the hose may be easily inserted in-between the first clamping element and the second clamping element when the first clamping element and the second clamping element are in a non-clamping configuration, namely in a releasing configuration. Thereby, an easy-to-handle system may be providable.

The term "the first clamping element and the second clamping element are configured for interacting" may denote that the first clamping element and the second clamping element may be formed with corresponding geometries such that the first clamping element and the second clamping element may be formed complementary to each other.

The relative movement between the hose and the clamping device may be inhibited by inhibiting a relative movement between the first clamping element and the hose and at the same time by inhibiting a relative movement between the second clamping element and the hose.

According to a further exemplary embodiment of the present invention, the first clamping element comprises a first retainer shaped semi-circular and comprising a first diameter, wherein the first diameter is substantially equal to a diameter of the hose, wherein the second clamping element comprises a second retainer shaped semi-circular and comprising a second diameter, wherein the second diameter is substantially equal to the first diameter, and wherein the first retainer and the second retainer are configured for being in contact with the outer surface of the hose when the clamping device is in the clamping configuration.

Hence, the clamping device may be easy to manufacture and at the same time may provide a reliable clamping of the hose.

By providing the first diameter of the first retainer and the second diameter of the second retainer being substantially equal may allow the clamping device, when being in the clamping configuration, the first retainer and the second retainer to form a circular opening in-between for holding and clamping the hose.

By providing the first diameter and the second diameter both substantially equal to the diameter of the hose may allow an easy and reliable clamping of the hose.

The term "the first retainer and the second retainer are configured for being in contact with the outer surface of the hose" may denote that the respective semi-circular shaped retainer is configured for contacting with the outer surface of the hose. Particularly, an inner contact surface of the respective retainer may have a surface roughness which inhibits a sliding of the hose when the hose is clamped by the clamping device in the clamping configuration.

According to a further exemplary embodiment of the present invention, the first clamping element and the second clamping element are further configured for being distanced to each other such that the hose is releasable from the first clamping element and the second clamping element, when the clamping device is in a releasing configuration.

Hence, the clamping device may be moveable from the clamping configuration to the releasing configuration by the user in an easy way. Therefore, the clamping device may be easily usable. Particularly, the hose may be releasable from the clamping device in an easy way and in a one hand use.

The term "releasing configuration" may denote a position at which the first clamping element and the second clamping element are distanced to each other such that the hose may be insertable in-between the first clamping element and the second clamping element. Additionally, the hose may be releasable from the first clamping element and the second clamping element. Preferably, the hose may be "laid" in contact with one of the first clamping element, particularly the first retainer, or the second clamping element, particularly the second retainer, and the other one of the first clamping element and the second clamping element is brought in contact with the other clamping element.

According to a further exemplary embodiment of the present invention, the first clamping element and/or the second clamping element comprises a mechanical stop configured for preventing a crushing of the first clamping element and the second clamping element when the clamping device is moved to the clamping configuration.

Therefore, a durable clamping device may be providable. Additionally, the hose may be protected and damages of the hose may be avoided. Hence, a reliable sealing may be providable.

The term "mechanical stop" may denote a feature with absorbs potential forces acting on the first clamping element and the second clamping element when the first clamping element and the second clamping element come in contact. Particularly, the mechanical stop may be a built-in physical stop preventing a crushing of the first clamping element and the second clamping element. The mechanical stop may particularly be an elastic capping.

According to a further exemplary embodiment of the present invention, the first clamping element further comprises a fastening portion coupled to the first retainer and comprising two through-holes, wherein the fastening portion is configured for connecting the first end of each of the two connecting devices to a respective one of the two through-holes.

Therefore, a convenient clamping device may be providable. The clamping device additionally allows clamping of the hose or adjusting of the clamping of the hose when the clamping device has already been mounted to the mould bracket by the two connecting devices.

The term "connecting the first end of each of the two connecting devices to a respective one of the two through-holes" may denote that the connecting device is inserted through the though-hole such that the head lies against the surface of the fastening portion being turned away from the mould bracket when the clamping device is mounted to the mould bracket. Further, the fastening portion is configured for connecting the first end of each of the two connecting devices to a respective one of the two through holes such that, when the clamping device is in the clamping configuration, the two connecting devices each extend parallel to the fixedly clamped hose.

According to an exemplary embodiment of the invention, the clamping device further comprises a handling portion configured for handling the clamping device by a user and configured for adjusting a clamping force of the first clamping element and the second clamping element, and a first arm connecting the handling portion and the first clamping element, a second arm connecting the handling portion and the second clamping element, wherein the first arm and the second arm are connected to the handling portion by a hinge configured for moving the first clamping element and the second clamping element between the clamping configuration and the releasing configuration.

Hence, the clamping device may be easily operatable in a one hand use by a user (e.g., with one hand only).

The term "adjusting the clamping force" may denote that different clamping forces and thereby retaining forces may be adjustable by the user dependent on the intended use, particularly dependent on properties of the hose to be clamped. In particular, the material of the different hoses may withstand different clamping respectively retaining forces. Additionally, the clamping force may be dependent on the pressure difference applied to the vacuum mould.

According to a further exemplary embodiment of the invention, the first arm and the second arm are each formed in a C-shape. Thereby, the first arm and the second arm may be formed identical. Particularly, the first arm and the second arm may each be coupled to the handling portion at a common hinge. Further, the first clamping element may be exchangeable coupled to the first arm at a first fastening point. Additionally, the second clamping element may be coupled to the second arm at a second fastening point.

The term "the hinge is configured for moving the first clamping element and the second clamping element between the clamping configuration and the releasing configuration" may denote that the hinge may allow an angular movement of the first arm relative to the second arm. Thereby, the first clamping element and the second clamping element may be moved between the clamping configuration in which the first clamping element and the second clamping element are in contact with each other, and the releasing configuration in which the first clamping element and the second clamping element are distanced to each other.

According to a further exemplary embodiment of the present invention, the first clamping element is exchangeable mounted to the first arm, and the second clamping element is exchangeable mounted to the second arm.

Therefore, a flexible clamping device may be providable which is usable for different diameters of the hose and hence for different vacuum moulds.

The term "exchangeable mounted" may denote that the clamping element may be dismounted, and another different clamping element may be mounted to the arm. Particularly, a clamping element may be mounted comprising a different diameter. Thereby, if a hose having a larger diameter should be clamped in the clamping configuration, the first clamping element and the second clamping element may be displaced by different clamping elements having a first retainer and a second retainer being correspondingly semi-circular shaped and having a larger diameter.

According to a further exemplary embodiment of the present invention, each of the two connecting devices comprises a screw, particularly a finger screw, comprising a head, particularly a knurled head, at the first end, a compression spring arranged at the screw, and configured for exerting a pulling force on the hose, when the hose is fixedly clamped in the clamping configuration, and a guide sleeve extending over substantially an entire axial extension of the screw, wherein the screw and the compression spring are arranged inside the guide sleeve, and wherein the first end of each of the guide sleeves is connectable to the clamping device and the second end of each of the guide sleeves is connectable to the mould bracket.

Hence, an easy and reliable connecting device may be providable which enables at the same time connecting the clamping device and the mould bracket and providing a pulling force on the hose and thereby on a flange of the flexible insert. Hence, a flush mounting of the flange of the flexible insert against an inner surface of the mould may be providable. Thereby, the vacuum-tight sealing may be improved.

Providing the screw with a knurled head at the first end may provide an ergonomic possibility to mount the screw.

The term "exerting a pulling force on the hose" may denote that the compression spring is arranged at the screw such that, when the hose is fixedly clamped by the clamping device, the pulling fore is exerted on the hose. Thereby, the flange of the flexible insert is mounted flush against an inner wall of the mould shell.

Further, the term "guide sleeve" may denote a guide tap or a guide bushing. The guide sleeve may be a ridged hollow body having an external thread on its outer surface. Particularly, an external thread on at least a part of the outer surface which is intended to be mounted to the mould bracket.

By providing each of the two compression springs on two opposing sides of the first retainer may provide an equal and uniform force transmission on the hose.

The term "the first end is connected to the clamping device" may denote that the head of the screw lies against a surface of the clamping device turned away from the mould bracket, when the clamping device and the mould bracket are mounted to each other by the two connecting devices.

According to a further exemplary embodiment of the present invention, the mould bracket comprises two threaded guide holes, wherein each of the two threaded guide holes is configured for mounting, particularly screw mounting, of a respective one of the two connecting devices, wherein the second end of the guide sleeve is configured for fitting in a respective one of the two threaded guide holes.

Hence, a reliable detachably fixing of the connecting device and the mould bracket may be provided.

The term "threaded guide hole" may denote a blind hole comprising an internal thread along at least a part of its axial extension.

Furthermore, the term "the second end of the guide sleeve is configured for fitting in a respective one of the two threaded guide holes" may denote that the outer diameter of the guide sleeve corresponds substantially to the inner diameter of the threaded guide hole. Additionally, the second end of the guide sleeve may comprise an external thread corresponding to an internal thread of the threaded guide hole.

The term "screw mounting" may denote a connection of an external thread with a corresponding internal thread. Particularly, the screw mounting may be detachably fixing the respective connecting device inside the respective threaded guide hole.

According to a further exemplary embodiment of the invention, the first end of each of the two guide sleeves is fixed in one of the two through-holes in the fastening portion.

Therefore, a reliable connection between the mould bracket and the clamping device may be providable. At the same time an exchangeable connecting device may be usable dependent on for example the intended pulling force or retaining force.

The term "the first end of the guide sleeve is fixed in the through-hole in the fastening portion" may denote that the first end of the guide sleeve is guided through the through-hole and the head of the screw lies against the surface of the fastening portion being turned away from the mould bracket when the clamping device and the mould bracket are mounted to each other by the connecting devices.

According to a further exemplary embodiment of the present invention, the mould bracket comprises two halves which are connectable to each other, in particular by a screw connection, wherein each of the two halves comprises a semi-circular recess comprising a recess diameter, wherein the recess diameter is substantially equal to an outer diameter of the steel branch of the mould, and wherein the two semi-circular recesses are configured for enclosing the steel branch of the mould, when the mould bracket is mounted to the steel branch, wherein in particular one of the two halves comprises two threaded guide holes configured for mounting, particularly screw mounting, of a respective one of the connecting devices.

Hence, the mould bracket may be easily mounted and disassembled from the mould. Thereby, a re-usable mould bracket may be providable which saves costs.

Particularly, the screw connection may comprise two screws mounted to opposing sides of the semi-circular recess.

By providing the two threaded guide holes in one of the two halves may allow to solely exchange one half if, e.g., the threaded guide hole is damaged, and a fastening of the guide sleeve may no longer be possible. Hence, an easy and cost-efficient maintenance of the entire adjustable hose clamping arrangement may be possible.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Figure 1: shows an adjustable hose clamping arrangement with a hose and a steel branch according to an exemplary embodiment.
- Figure 2: shows a clamping device according to an exemplary embodiment.
- Figure 3: shows in a side view an adjustable hose clamping arrangement according to an exemplary embodiment of the invention.
- Figure 4: shows in a perspective view an adjustable hose clamping arrangement according to an exemplary embodiment.
- Figure 5: shows a side view of a mould arrangement according to an exemplary embodiment of the invention.

### Detailed Description

The illustrations in the drawings are schematically. It is noted that in different figures, similar or identical elements are provided with the same reference signs.

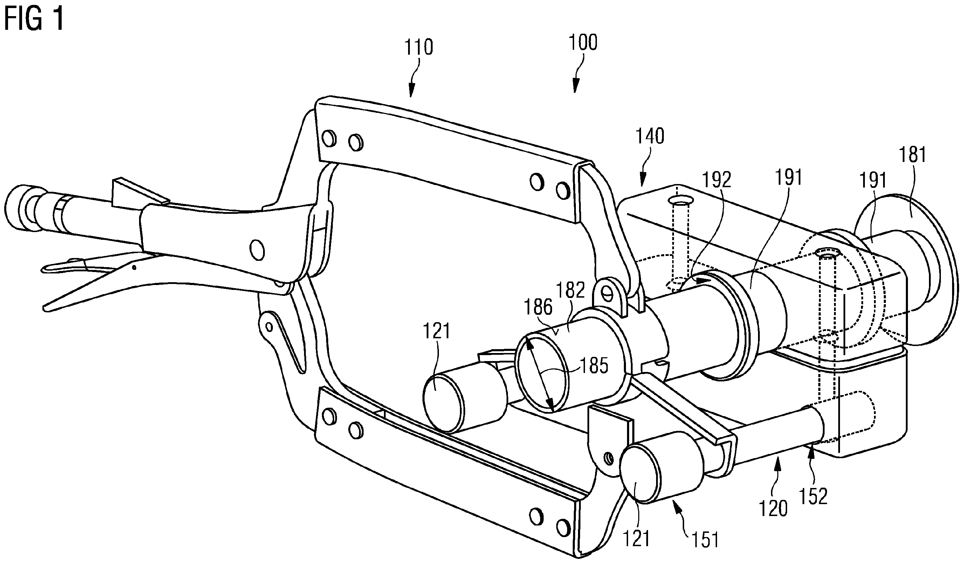

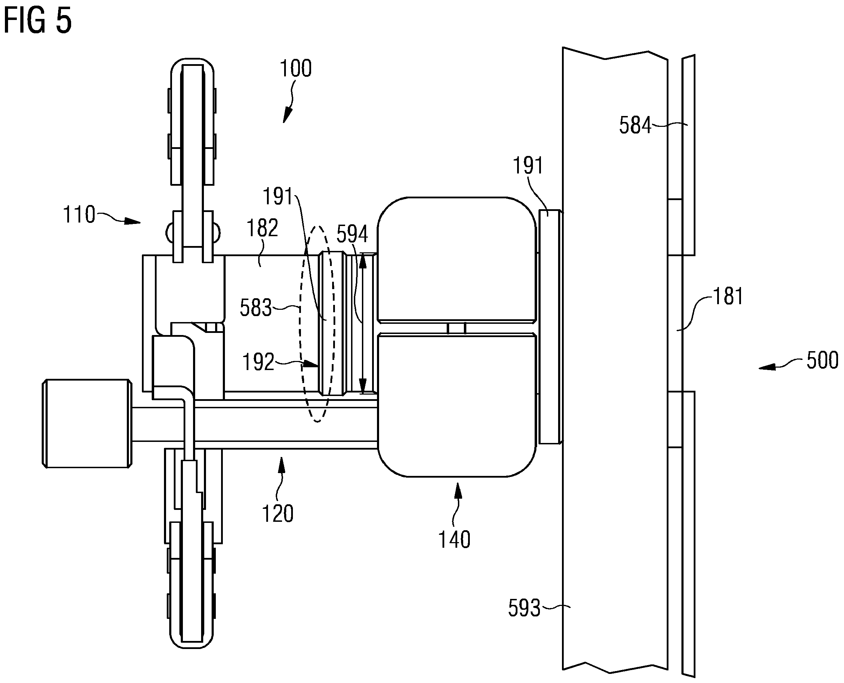

**Figure 1** shows an adjustable hose clamping arrangement 100 with a hose 182 and a steel branch 191 according to an exemplary embodiment. The adjustable hose clamping arrangement 100 may be used for vacuum-tight sealing of the hose 182 of a flexible insert 584 (shown in Figure 5) to a free end 192 of a steel branch 191 of a vacuum mould 593 (shown in a partial view in Figure 5), wherein the flexible insert 584 is guidable through the steel branch 191 from an inside of the vacuum mould 593 to an outside of the vacuum mould 593. The adjustable hose clamping arrangement 100 comprises a clamping device 110 fixedly clamping the hose 182 such that a relative movement between the hose 182 and the clamping device 110 is inhibited, a mould bracket 140 mounted to the steel branch 191 of the vacuum mould 593, a first connecting device 120 and a second connecting device 120 being equal to the first connecting device 120. In Figure 1 solely the head 121 of the second connecting device 120 is shown. A first end 151 of the first connecting device 120 is connected to the clamping device 110 and a second end 152 of the first connecting device 120 being opposite of the first end 151, is connected to the mould bracket 140 such that an outer surface 186 of the hose 182 next to a free end of the steel branch 191 is accessible for the vacuum-tight sealing between the hose 182 and the free end of the steel branch 191.

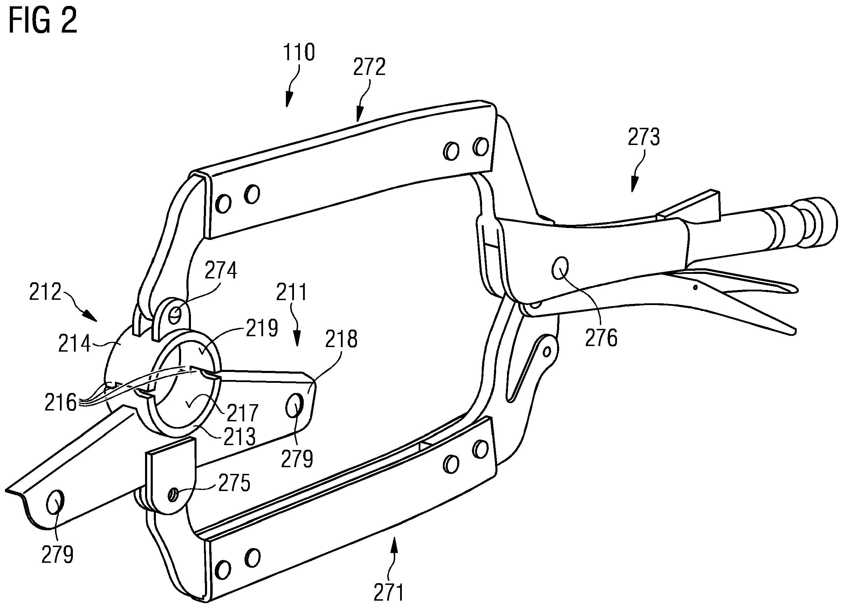

**Figure 2** shows a clamping device 110 according to an exemplary embodiment. The clamping device 110 comprises a first clamping element 211 and a second clamping element 212. In Figure 2, the clamping device 110 is shown in a clamping configuration without the hose 182. The first clamping element 211 and the second clamping element 212 are configured for interacting in the illustrated clamping configuration such that the relative movement between the hose 182 (not illustrated in Figure 2) and the first clamping element 211 as well as the second clamping element 212 is inhibited.

The clamping device 110 further comprises a handling portion 273 configured for handling the clamping device 110 by a user and configured for adjusting a clamping force of the first clamping element 211 and the second clamping element 212. The handling portion 273 and the first clamping element 211 are connected by a first arm 271. Furthermore, the second clamping element 212 and the handling portion 273 are connected by a second arm 272. The first arm 271 and the second arm 272 are formed in a C-shape. The first arm 271 and the second arm 272 are coupled to the handling portion 273 by a common hinge 276 which allows a movement of the first arm 271 and the second arm 272 between the clamping configuration (shown in Figure 2) and a releasing configuration in which the first clamping element 211 and the second clamping element 212 are distanced to each other such that the hose 182 may be released from the first clamping element 211 and the second clamping element 212.

The first clamping element 211 is coupled to the first arm 271 at a first fastening point 275 which is configured for allowing an exchangeable coupling of the first clamping element 211 to the first arm 271. Particularly, the first fastening point 275 comprises a screw connection between the first arm 271 and the first clamping element 211. Further, the second clamping element 212 is coupled to the second arm 272 at a second fastening point 274 which is configured for allowing an exchangeable coupling of the second clamping element 212 to the second arm 272. Particularly, the second fastening point 274 comprises a screw connection between the second arm 272 and the second clamping element 212.

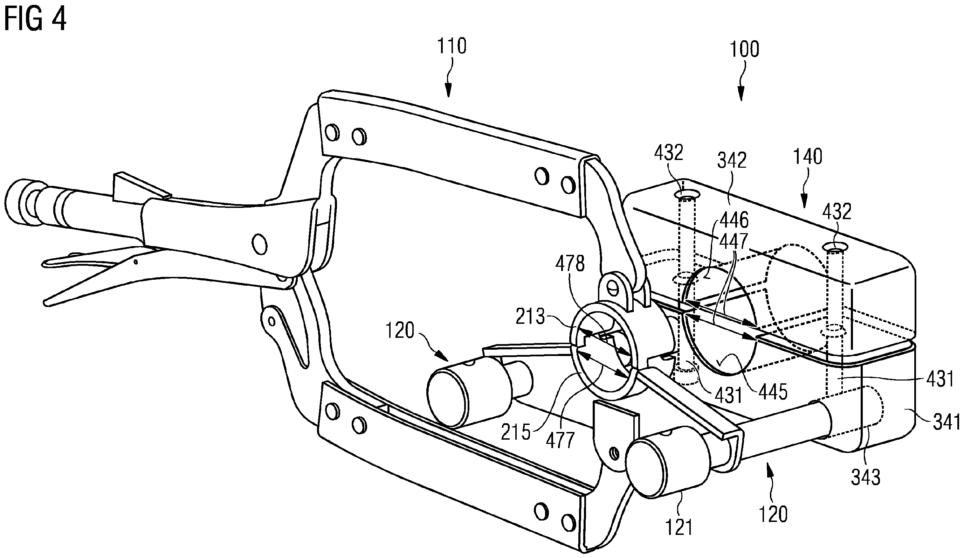

The second clamping element 212 comprises a second retainer 214 which is shaped semi-circular and comprises a second diameter 478 (illustrated in Figure 4). The second diameter 478 is substantially equal to the outer diameter 185 of the hose 182. The second retainer 214 comprises a semi-circular shaped second inner contact surface 219 which is configured for being in contact with the outer surface 186 of the hose 182 when the clamping device 110 is in the clamping configuration. The second inner contact surface 219 may be roughened to enhance an ability of inhibiting a relative movement between the second retainer 214 respectively the second inner contact surface 219 and the outer surface 186 of the hose 182.

The first clamping element 211 comprises a first retainer 213 which is semi-circular shaped and comprises a first diameter 477 (illustrated in Figure 4) corresponding to the outer diameter 185 of the hose 182. The first diameter 477 and the second diameter 478 are substantially equal. The first retainer 213 comprises a semi-circular shaped first inner contact surface 217 which is configured for being in contact with the outer surface 186 of the hose 182 when the clamping device 110 is in the clamping configuration. The first inner contact surface 217 and the second inner contact surface 219 may be identical for allowing a more even force transmission and clamping of the hose 182.

Furthermore, the first clamping element 211 comprises a fastening portion 218 coupled to the first retainer 215. As shown in Figure 2, the fastening portion 218 and the first retainer 213 may be formed in one piece. The fastening portion 218 comprises two through-holes 279. As illustrated in Figure 2, the two through-holes 279 may be formed on two opposing sides of the first retainer 213.

The first clamping element 211 comprises a mechanical stop 216 being formed as a part of the first retainer 213 at each of the two ends of the semi-circular shaped first retainer 215. Hence, in total the first retainer 213 comprises two mechanical stops 216. Additionally, the second clamping element 212 comprises a mechanical stop 216 being formed as a part of the second retainer 214 at each of the two ends of the semi-circular shaped second retainer 214. Hence, in total the second retainer 214 comprises two mechanical stops 216. The mechanical stops 216 of the first clamping element 211 and the mechanical stops 216 of the second clamping element 212 comprise mating geometries. Thereby, a crushing of the first retainer 213 and the second retainer 214 may be inhibited.

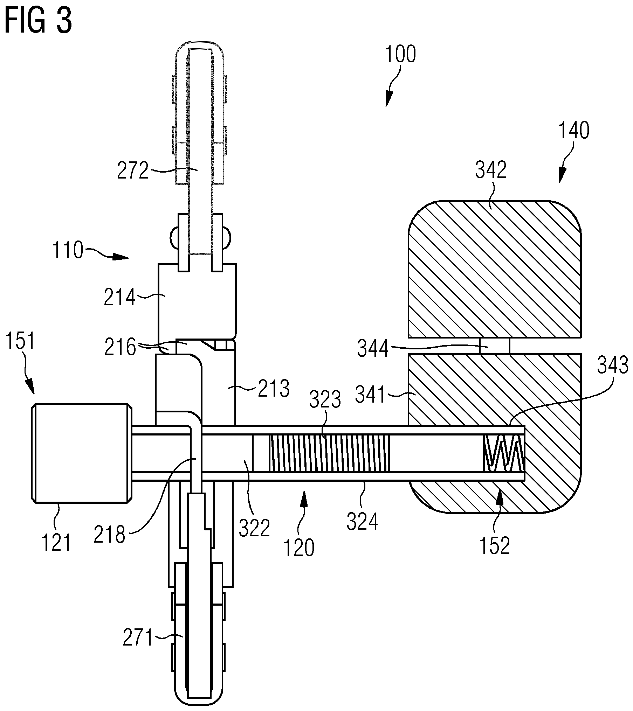

**Figure 3** shows in a side view an adjustable hose clamping arrangement 100 according to an exemplary embodiment of the invention. The adjustable hose clamping arrangement 100 comprises a clamping device 110, two connecting devices 120 and the mould bracket 140. In Figure 3 solely one of the two connecting devices 120 is shown. As may be seen in Figure 3, the mechanical stop 216 formed as a part of the first retainer 213 and the mechanical stop 216 formed as a part of the second retainer 214 comprise a mating geometry for inhibiting a crushing of the first retainer 213 and the second retainer 214.

The mould bracket 140 comprises a first half 341 and a second half 342, both illustrated in a sectional view in Figure 3. The first half 341 and the second half 342 are mounted to each other by two screws 344, wherein in Figure 3 solely one screw 344 is shown. The first half 341 comprises two threaded guide holes 343, wherein in Figure 3 solely one of the two threaded guide holes 343 is illustrated.

The connecting device 120 comprises a knurled head 121 at a first end 151 and is inserted through the through-hole 279 (shown in Figure 2) of the fastening portion 218 of the first clamping element 211. Thereby, an outer surface of a guide sleeve 324 is at the first end 151 in contact with the inner surface of the through-hole 279. At the second end 152, the guide sleeve 324 is fitted into and mounted to the threaded guide hole 343 of the first half 341 of the mould bracket 140. Additionally, a screw 322 and a compression spring 323 are arranged inside the guide sleeve 324, whereby the compression spring 323 is arranged around the screw 322 and extends over a part of the axial extension of the screw 322. The compression spring 323 may provide a pulling force on the hose 182 and therefore on the flange 181 of the flexible insert 584 of the vacuum mould 593 when the hose 182 is fixedly clamped in the clamping configuration. The screw 322 mounts the connecting device 120 to the mould bracket 140.

**Figure 4** shows in a perspective view an adjustable hose clamping arrangement 100 according to an exemplary embodiment. The adjustable hose clamping arrangement 100 comprises a clamping device 110 which is described in more detail with regard to Figure 2, two connecting devices 120 which are described in more detail with regard to Figure 3, and the mould bracket 140.

The first retainer 213 comprises a first diameter 477 and the second retainer 214 comprises a second diameter 478. As may be seen in Figure 4, the first diameter 477 and the second diameter 478 are substantially equal. The first diameter 477 and the second diameter 478 are chosen dependent on the outer diameter 185 of the hose 182 to be clamped.

The mould bracket 140 comprises the first half 341 and the second half 342 which are connected to each other by two screws 431. Each screw 431 is screwed in an internal thread of a fixation hole 432 in the second half 342.

The first half 341 comprises a first semi-circular recess 445 and the second half 342 comprises a second semi-circular recess 446. The first recess 445 and the second recess 446 both comprise a recess diameter 447 being substantially equal to an outer diameter 594 of the steel branch 191 (both illustrated in Figure 5). The two semi-circular recesses 445 and 446 are configured for enclosing the steel branch 191 of the mould 593, when the mould bracket 140 is mounted to the steel branch 191.

The second half 342 comprises the two threaded guide holes 343 (solely one is illustrated in Figure 4) to which a respective connecting device 120 is screw mounted.

**Figure 5** shows a side view of a vacuum mould arrangement 500 according to an exemplary embodiment of the invention. The mould arrangement 500 comprises the adjustable hose clamping arrangement 100 and a vacuum mould 593. The mould bracket 140 is mounted to the steel branch 191 which provides a connection from the mould cavity shown on the right side of the vacuum mould 593 to the environment shown on the left side of the vacuum mould 593 in Figure 5.

The clamping device 110 is mounted by the two connecting devices 120 to the mould bracket 140 which is mounted to the steel branch 191 of the mould 593. The flexible insert 584 is fixed to the flange 191 such that after vacuum-tight sealing of the hose 182 to the steel branch 191, a moulding material may be inserted in the vacuum mould 593 via the hose 182.

At the free end 192 of the steel branch 191, the hose 182 may be vacuum-tight sealed to the steel branch 191 in a sealing area 583 illustrated by the dotted line. As may be seen in Figure 5, the sealing area 583 may be conveniently accessed. By choosing a different length of the connecting devices 120, the distance between the clamping device 110 and the free end 192 of the steel branch 191 may be adapted.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. An adjustable hose clamping arrangement (100) for vacuum-tight sealing of a hose (182) of a flexible insert (584) to a free end (192) of a steel branch (191) of a vacuum mould (593), wherein the flexible insert (584) is guidable through the steel branch (191) from an inside of the vacuum mould (593) to an outside of the vacuum mould (593), wherein the adjustable hose clamping arrangement (100) comprises
a clamping device (110) configured for fixedly clamping the hose (182) such that a relative movement between the hose (182) and the clamping device (110) is inhibited,
a mould bracket (140) configured for being mountable to the steel branch (191) of the vacuum mould (593),
two connecting devices (120), wherein a first end (151) of each of the two connecting devices (120) is connected to the clamping device (110) and a second end (152) of each of the two connecting devices (120) being opposite of the first end (151), is connected to the mould bracket (140) such that an outer surface (186) of the hose (182) next to a free end (192) of the steel branch (191) is accessible for the vacuum-tight sealing between the hose (182) and the free end (192) of the steel branch (191).

2. The adjustable hose clamping arrangement (100) according to claim 1,
wherein the clamping device (110) comprises
a first clamping element (211), and
a second clamping element (212),
wherein the first clamping element (211) and the second clamping element (212) are configured for interacting in a clamping configuration such that the relative movement between the hose (182) and the clamping device (110) is inhibited.

3. The adjustable hose clamping arrangement (100) according to claim 2,
wherein the first clamping element (211) comprises a first retainer (213) shaped semi-circular and comprising a first diameter (477), wherein the first diameter (477) is substantially equal to an outer diameter (185) of the hose (182), wherein the second clamping element (212) comprises a second retainer (214) shaped semi-circular and comprising a second diameter (478), wherein the second diameter (478) is substantially equal to the first diameter (477), and
wherein the first retainer (213) and the second retainer (214) are configured for being in contact with the outer surface (186) of the hose (182) when the clamping device (110) is in the clamping configuration.

4. The adjustable hose clamping arrangement (100) according to claim 2 or 3,
wherein the first clamping element (211) and the second clamping element (212) are further configured for being distanced to each other such that the hose (182) is releasable from the first clamping element (211) and the second clamping element (212), when the clamping device (110) is in a releasing configuration.

5. The adjustable hose clamping arrangement (100) according to any one of the claims 2 to 4,
wherein the first clamping element (211) and/or the second clamping element (212) comprises a mechanical stop (216) configured for preventing a crushing of the first clamping element (211) and the second clamping element (212) when the clamping device (110) is moved into the clamping configuration.

6. The adjustable hose clamping arrangement (100) according to any one of the claims 3 to 5,
wherein the first clamping element (211) further comprises
a fastening portion (218) coupled to the first retainer (213) and comprising two through-holes (279),
wherein the fastening portion (218) is configured for connecting the first end (151) of each of the two connecting devices (120) to a respective one of the two through-holes (279).

7. The adjustable hose clamping arrangement (100) according to any one of the claims 2 to 6,
wherein the clamping device (110) further comprises
a handling portion (273) configured for handling the clamping device (110) by a user and configured for adjusting a clamping force of the first clamping element (211) and the second clamping element (212), and
a first arm (271) connecting the handling portion (273) and the first clamping element (211),
a second arm (272) connecting the handling portion (273) and the second clamping element (212),
wherein the first arm (271) and the second arm (272) are connected to the handling portion (273) by a hinge (276), wherein the hinge (276) is configured for moving the first clamping element (211) and the second clamping element (212) between the clamping configuration and the releasing configuration.

8. The adjustable hose clamping arrangement (100) according to claim 7,
wherein the first clamping element (211) is exchangeable mounted to the first arm (271), and
wherein the second clamping element (212) is exchangeable mounted to the second arm (272).

9. The adjustable hose clamping arrangement (100) according to any one of the claims 1 to 8,
wherein each of the two connecting devices (120) comprises
a screw (322), particularly a finger screw (322), comprising a head (121), particularly a knurled head (121), at the first end (151),
a compression spring (323) arranged at the screw (322), and configured for exerting a pulling force on the hose (182), when the hose (182) is fixedly clamped in the clamping configuration,
a guide sleeve (324) extending over substantially an entire axial extension of the screw (322),
wherein the screw (322) and the compression spring (323) are arranged inside the guide sleeve (324),
wherein the first end (151) of each of the guide sleeves (324) is connected to the clamping device (110) and the second end (152) of each of the guide sleeves (324) is connected to the mould bracket (140).

10. The adjustable hose clamping arrangement (100) according to claim 9,
wherein the mould bracket (140) comprises two threaded guide holes (343),
wherein each of the two threaded guide holes (343) is configured for mounting, particularly screw mounting, of a respective one of the two connecting devices (120),
wherein the second end (152) of the guide sleeve (324) is configured for fitting in a respective one of the two threaded guide holes (343).

11. The adjustable hose clamping arrangement (100) according to claims 10 and 6,
wherein the first end (151) of each of the two guide sleeves (324) is fixed in one of the two through-holes (279) in the fastening portion (218).

12. The adjustable hose clamping arrangement (100) according to any one of the claims 1 to 11,
wherein the mould bracket (140) comprises two halves (341, 342) which are connectable to each other, in particular by a screw connection, wherein each of the two halves (341, 342) comprises a semi-circular recess (445, 446) comprising a recess diameter (447), wherein the recess diameter (447) is substantially equal to an outer diameter (594) of the steel branch (191) of the vacuum mould (593), and
wherein the two semi-circular recesses (445, 446) are configured for enclosing the steel branch (191) of the vacuum mould (593), when the mould bracket (140) is mounted to the steel branch (191),
wherein one of the two halves (341, 342) comprises two threaded guide holes (343) configured for mounting, particularly screw mounting, of a respective one of the connecting devices (120).

13. A vacuum mould arrangement (500) for vacuum-tight sealing of a hose (182) of a flexible insert (584) to a free end (192) of a steel branch (191) of a vacuum mould (593), the vacuum mould arrangement (500) comprising
an adjustable hose clamping arrangement (100) according to any one of the claims 1 to 12, and
a vacuum mould (593) comprising the flexible insert (584), the hose (182), and the steel branch (191), wherein the hose (182) is fixedly clamped by the clamping device (110) such that a relative movement between the hose (182) and the clamping device (110) is inhibited, wherein the mould bracket (140) is mounted to the steel branch (191) of the vacuum mould (593),
wherein the first end (151) of each of the two connecting devices (120) is connected to the clamping device (110) and the second end (152) of each of the two connecting devices (120) being opposite of the first end (151), is connected to the mould bracket (140), and
wherein the outer surface (186) of the hose (182) next to the free end (192) of the steel branch (191) is accessible for the vacuum-tight sealing between the hose (182) and the free end (192) of the steel branch (191).

14. A method of manufacturing an adjustable hose clamping arrangement (100) for vacuum-tight sealing of a hose (182) of a flexible insert (584) to a free end (192) of a steel branch (191) of a vacuum mould (593), wherein the flexible insert (584) is guidable through the steel branch (191) from an inside of the vacuum mould (593) to an outside of the vacuum mould (593), wherein the method comprises
providing a clamping device (110) configured for fixedly clamping the hose (182) such that a relative movement between the hose (182) and the clamping device (110) is inhibited,
providing a mould bracket (140) configured for being mountable to the steel branch (191) of the vacuum mould (593),
providing two connecting devices (120),
connecting a first end (151) of each of the two connecting devices (120) to the clamping device (110), and
connecting a second end (152) of each of the two connecting devices (120) being opposite of the first end (151), to the mould bracket (140) such that an outer surface (186) of the hose (182) next to a free end (192) of the steel branch (191) is accessible for the vacuum-tight sealing between the hose (182) and the free end (192) of the steel branch (191).

15. A method of using an adjustable hose clamping arrangement (100) for vacuum-tight sealing of a hose (182) of a flexible insert (584) to a free end (192) of a steel branch (191) of a vacuum mould (593), the method of using the adjustable hose clamping arrangement (100) comprises
guiding the flexible insert (584) through the steel branch (191) from an inside of the vacuum mould (593) to an outside of the vacuum mould (593),
fixedly clamping the hose (182) by a clamping device (110) such that a relative movement between the hose (182) and the clamping device (110) is inhibited,
mounting a mould bracket (140) to the steel branch (191) of the vacuum mould (593),
connecting a first end (151) of each of the two connecting devices (120) to the clamping device (110), and
connecting a second end (152) of each of the two connecting devices (120) being opposite of the first end (151), to the mould bracket (140),
vacuum-tight sealing, in particular by using a tacky tape, the hose (182) and the free end (192) of the steel branch (191).
